# EUROPEAN PATENT APPLICATION

(11) **EP 1 178 242 A2**
(43) Date of publication of application: **06.02.2002**
(21) Application number: 01118657.4
(22) Date of filing: 02.08.2001
(51) Int. Cl.: F16H 55/56, F16H 61/00

(54) **Continuously-variable-ratio belt transmission assembly**

(30) Priority: 03.08.2000 IT RE000079
(71) Applicant: Lombardini S.r.l., 42100 Reggio Emilia (IT)
(72) Inventor: Borghi, Gianni, 42020 Albinea (IT)
(74) Representative: Franzolin, Luigi

(57) **Abstract**

The assembly includes an input member (10) having a radial surface (10a) and fitted integrally with a coaxial drive shaft (11); and a pulley (30) fitted coaxially to and idle with respect to the drive shaft (11) and having two half-pulleys (31, 32) connected to each other to rotate integrally and move axially with respect to each other, and which engage a drive belt (33). There is also provided a thrust-clutch member (40), which is connected to the drive shaft (11) so as to rotate integrally with and move axially with respect to the drive shaft, and is located adjacent to the second half-pulley. The thrust-clutch member (40) is adapted to move its radial surface (40a) axially into contact with the second outer radial surface (32b) of the pulley (30), and simultaneously moves the entire pulley (30) to bring the first outer radial surface (31b) of the pulley into contact with the radial surface (10a) of the input member (10), so as to make the radial surfaces frictionally integral with each other, and exerts axial thrust on the two half-pulleys (31, 32) so as to determine the axial distance between them in direct relation to its own axial position; the thrust-clutch member (40) having a position, at a maximum distance from the input member, in which the radial surfaces are detached. There is also provided a control device (50) for varying, on command, the axial position of the thrust-clutch member (40).

## Description

The present invention relates to a continuously-variable-ratio belt transmission assembly.

The present invention may be used to advantage, though not exclusively, on internal combustion engine motorcycles or motor vehicles, particularly low-power types such as micro-vehicles or so-called utility vehicles.

In such vehicles, the transmission ratio between the engine and the wheels must be varied to adapt the output power of the engine to operating characteristics such as desired vehicle speed, vehicle load, etc.

For which purpose, such vehicles traditionally feature, between the engine and the wheels, a drive comprising a variable-speed belt drive with a pulley defined by two axially-movable half-pulleys, the distance between which determines the winding radius of the belt; and possibly also a centrifugal clutch device fitted between the input member and the drive shaft, and wherein engagement is effected by greatly increasing engine speed, and the transmission ratio is varied as a function of ultimate engine speed.

Known assemblies of this sort have the drawback of being fairly rigid in terms of both engagement and transmission ratio variation, and of normally requiring a high engine speed to fully engage the clutch device, thus dissipating a considerable amount of energy.

Moreover, engagement is invariably rough, thus resulting in discomfort to the user.

Also, at low engine speed or when the engine is turned off, no torque is transmitted between the drive shaft and the wheels, and, in some cases, e.g. when driving downhill, the engine provides no braking action.

It is an object of the present invention to eliminate the aforementioned drawbacks by providing a continuously-variable-ratio belt transmission assembly wherein engagement of the clutch device is smooth and not necessarily produced by increasing engine speed, and wherein the transmission ratio in use is determined, not rigidly by the speed of the engine, but by an external control.

It is a further object of the invention to provide a transmission assembly of the above characteristics, and which is also easy and cheap to produce.

These and other objects are achieved by the present invention as characterized in the accompanying Claims.

A non-limiting embodiment of the invention will be described by way of example with reference to the accompanying drawings, in which:
Figure 1 shows an axial section of the assembly as a whole;
Figure 2 shows an enlarged detail of Figure 1;
Figure 3 shows a view in direction III of Figure 1;
Figure 4 shows an enlarged detail of Figure 1.

The assembly shown comprises an input member 10 (e.g. the drive shaft flywheel) powered by the vehicle engine, having an axis A and a radial surface 10a perpendicular to axis A, and fitted integrally with a coaxial drive shaft 11. More specifically, drive shaft 11 is coaxial with input member 10, and has a first end 11' facing and fixed by screws to one end of input member 10.

A pulley 30 is fitted coaxially to and idle with respect to drive shaft 11, and is defined by two half-pulleys 31, 32, which are connected to each other to rotate together, are movable axially with respect to each other, engage a drive belt 33, and the distance between which determines the winding radius of belt 33 about pulley 30.

More specifically, a sleeve 15 is fitted coaxially to and idle with respect to drive shaft 11, and is provided on the outer surface with axial teeth by which it is connected to half-pulleys 31, 32, so that half-pulleys 31, 32 rotate integrally with sleeve 15, while at least one of them, in particular half-pulley 32, is movable axially with respect to sleeve 15.

Stop means (outer rings 16) limit the maximum distance between half-pulleys 31 and 32 on sleeve 15, which distance determines the minimum winding radius of the belt; and an inner ring 17, together with one of outer rings 16, prevents any axial displacement of half-pulley 31.

Sleeve 15 is movable axially (by a small amount) along drive shaft 11. More specifically, it is fitted to shaft 11 by means of two bearings 18, the inner rings of which run axially along shaft 11; and a precompressed elastic spring 19, interposed between end 11' and the nearest bearings 18, pushes sleeve 15 away from input member 10.

The active inner surfaces 31a and 32a of half-pulleys 31 and 32 are truncated-cone-shaped, diverge outwards, and engage drive belt 33. Since the section of belt 33 is practically undeformable, the radial position of the belt section and, hence, the winding radius of belt 33 about the pulley is varied by varying the distance between surfaces 31a and 32a.

Belt 33 also extends about a known driven pulley (not shown) for rotating a driven shaft, and which is also defined by two half-pulleys movable axially to and from each other to complement the movement of half-pulleys 31 and 32 and so keep belt 33 (which is inextensible) taut.

Half-pulley 31 is adjacent to input member 10 and has a first outer radial surface 31b which is adapted to mate frictionally and rotate integrally with radial surface 10a of input member 10. Similarly, the second half-pulley 32 has a second outer radial surface 32b.

The assembly also comprises a thrust-clutch member 40 connected to drive shaft 11 by axial grooves/teeth 12 so as to rotate integrally with and move axially with respect to shaft 11, and which is located adjacent to second half-pulley 32 and has a radial surface 40a which mates and rotates integrally with second outer radial surface 32b of pulley 30.

More specifically, member 40 comprises an axially-grooved hub 41 coupled with axial grooves/teeth 12 and joined to a bell-shaped portion 42 facing second half-pulley 32 and having radial surface 40a. A control device 50 is provided to vary, on command, the axial position of member 40, and which advantageously comprises a hinged lever 51 which acts axially on thrust-clutch member 40 and is operated by a linear actuator 56 via the interposition of an elastic means for easing frictional engagement of the radial surfaces. More specifically, lever 51 is hinged by a pin 511 to the transmission assembly housing, and its bottom portion comprises two arms 51a fitted on the ends with two cylindrical projections 52 engaging respective vertical tracks 53 formed on a ring 54 fitted axially to hub 41 via the interposition of a bearing 55.

The top portion 51b of lever 51 is connected to actuator 56, which varies the angular position of lever 51 and, via lever 51, the axial position of member 40. Actuator 56 may be linear or any other sort of actuating device, e.g. may be operated manually, electrically, hydraulically, etc., providing it varies, on command, the axial position of thrust-clutch member 40. Control device 50 thus provides for controlling the axial position of member 40 as required.

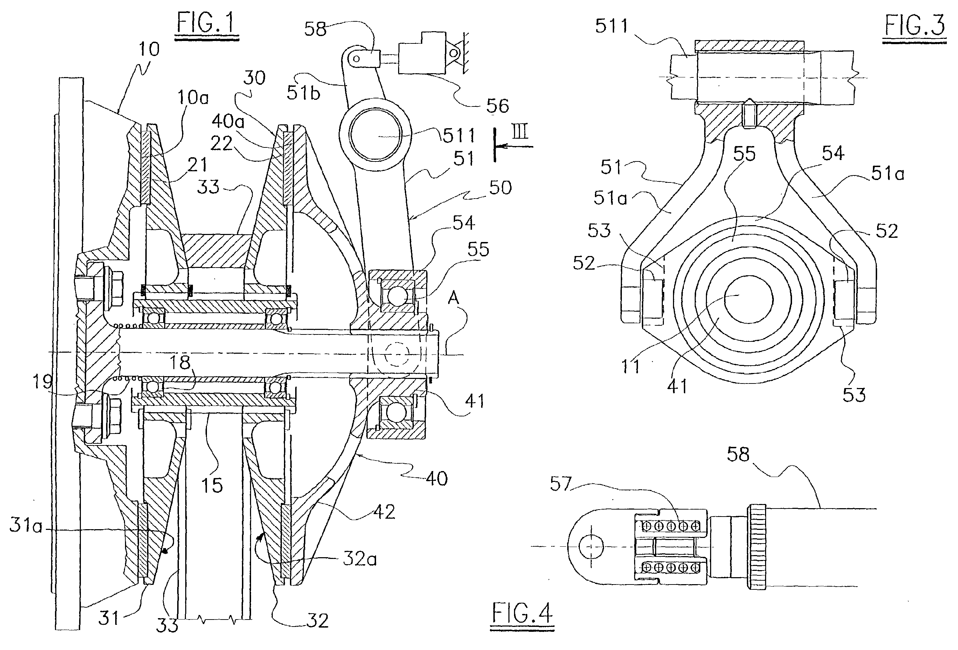

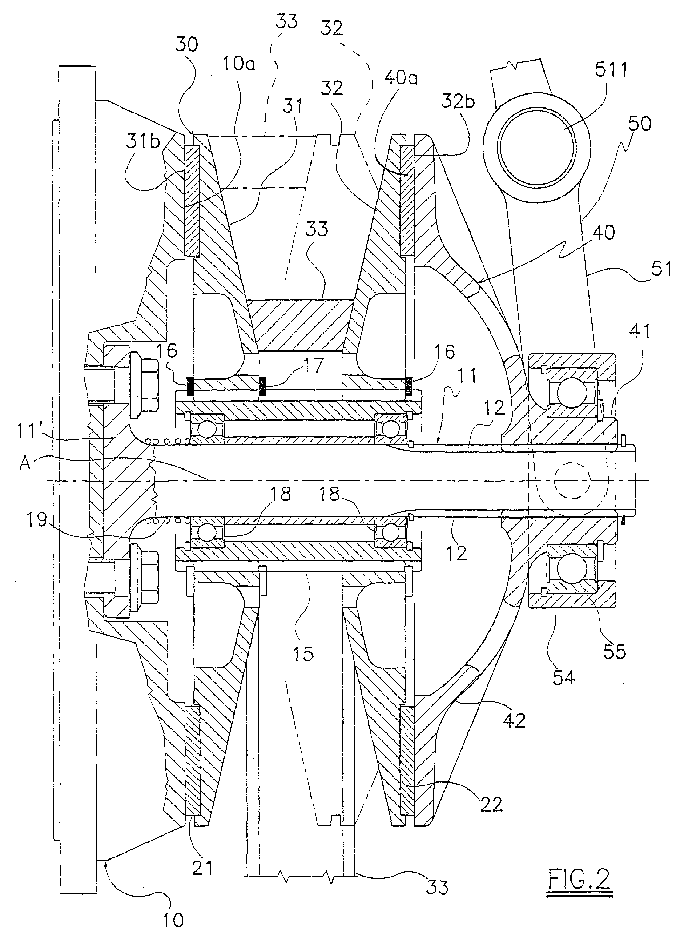

Thrust-clutch member 40 moves radial surface 40a axially into contact with second outer radial surface 32b of pulley 30, and then pushes first outer radial surface 31b of pulley 30 into contact with radial surface 10a of input member 10 to make pairs of radial surfaces 10a-31b, 32b-40a frictionally integral with each other. At the same time, thrust-clutch member 40 exerts axial thrust on half-pulleys 31 and 32 to determine the axial distance between them in direct relation to its own axial position. Thrust-clutch member 40 has an axial position at a maximum distance from the input member (as shown in Figure 1 and by the continuous line in Figure 2) in which radial surfaces 10a-31b and 32b-40a are detached; and pairs of radial surfaces 10a-31b and 32b-40a are mated with the aid of respective high-friction disks 21 and 22 fixed to half-pulleys 31 and 32, and the outer surfaces of which define radial surfaces 31b and 32b.

In actual use, thrust-clutch member 40 is initially in the limit position at a maximum distance from input member 10. In which position, sleeve 15 is kept relatively far from member 10 (with the aid of the thrust exerted by spring 19) so that first radial surface 31b is detached from radial surface 10a of input member 10; belt 33, due to the tension produced by the driven pulley, parts half-pulleys 31 and 32 to the maximum extent allowed by rings 16, and is therefore at the minimum distance from axis A; and radial surface 40a of member 40 is detached from radial surface 32b of pulley 30.

In this configuration, drive shaft 11 is disconnected from pulley 30, so that the vehicle engine is disconnected from the wheels (is in neutral); and belt 33, though idle, is kept taut and engaged by pulley 30 and the driven pulley.

When member 40 is moved towards input member 10 (leftwards in the drawings) by means of control device 50, members 40 and 10 and pulley 30 are first gradually engaged frictionally (while belt 33 is at the minimum distance from axis A). More specifically, when moved leftwards, thrust-clutch member 40 first moves radial surface 40a into contact with second radial surface 32b, and then, overcoming the action of spring 19, moves sleeve 15, and with it the whole of pulley 30, towards member 10 so that first radial surface 31b contacts radial surface 10a, and pulley 30 is gripped between surfaces 10a and 40a. When the axial thrust (leftwards) by device 50 is sufficient to make pairs of radial surfaces 10a-31b and 32b-40a frictionally integral with each other, frictional engagement occurs and pulley 30 is rotated by member 40, in turn rotated by shaft 11, and by input member 10. Half-pulleys 31 and 32 are both rotated integrally, since both engage sleeve 15 when rotating.

This connects the vehicle wheels and the engine while the transmission ratio is (advantageously) low, and the connection occurs while the engine is (advantageously) at low speed.

As the leftward axial thrust on member 40 is increased, half-pulleys 31 and 32 move gradually towards each other, thus producing a corresponding increase in the winding radius of belt 33 with respect to axis A, so that the transmission ratio (and therefore, for a given engine speed, also the rotation speed of the driven pulley) increases to a maximum value when half-pulleys 31 and 32 are the minimum distance apart (as shown by the dash line in Figure 2).

Conversely, when thrust-clutch member 40 is moved back (rightwards), half-pulleys 31 and 32 move away from each other, thus reducing the transmission ratio (and hence the speed of the vehicle); and, on the minimum transmission ratio being reached (at which the belt is nevertheless taut), frictional contact between pulley 30 and radial surfaces 10a and 40a is removed (typically at minimum engine speed), so that no power is transmitted to the wheels of the vehicle.

In each case, each axial position of member 40 corresponds biuniquely to a given transmission ratio. Controlling the axial position of member 40 as required by means of control device 50, the assembly according to the invention provides for extremely flexible transmission ratio control, regardless of engine speed. In particular, the transmission ratio may be controlled as required by means of a programmable electronic control to adapt vehicle performance to engine, load and road conditions according to a given function.

Moreover, a major advantages lies in the clutch device being engaged and released at minimum engine speed.

Rings 16 are particularly advantageous by limiting the maximum distance between half-pulleys 31 and 32, while still enabling engagement of belt 33 by the inner surfaces of the half-pulleys, when the half-pulleys are subjected to no thrust by member 40 and are unaffected by rotation of members 10 and 40. Though stationary, belt 33 is therefore maintained taut (with the aid of the driven pulley) and engaged by pulley 30 and the driven pulley, thus safeguarding against any slippage of the belt in the transient period in which pulley 30 is engaged frictionally by members 10 and 40.

Control device 50 may typically comprise hand- or pedal-operated means for moving member 40 (manual transmission).

Actuator 56 is advantageously connected to lever 51 by a member 58 having an elastic means 57 which is compressed elastically when the actuator is operated to push member 40 towards input member 10, thus providing for smooth frictional engagement of radial surfaces 10a-31b and 32b-40a and a smooth variation in transmission ratio.

Clearly, changes may be made to invention as described and illustrated herein without, however, departing from the scope of the accompanying Claims.

## Claims

1. A continuously-variable-ratio belt transmission assembly, **characterized by** comprising:
an input member (10) having a radial surface (10a) and fitted integrally with a coaxial drive shaft (11);
a pulley (30) fitted coaxially to and idle with respect to the drive shaft (11), and comprising two half-pulleys (31, 32), which are connected to each other to rotate integrally and move axially with respect to each other, and which engage a drive belt (33); the distance between the half-pulleys (31, 32) determining the winding radius of the belt (33); a first half-pulley (31) being adjacent to the input member (10) and having a first outer radial surface (31b) adapted to mate frictionally and rotate integrally with the radial surface (10a) of the input member (10); and a second half-pulley (32) having a second outer radial surface (32b);
a thrust-clutch member (40), which is connected to the drive shaft (11) so as to rotate integrally with and move axially with respect to the drive shaft, is located adjacent to the second half-pulley, and has a radial surface (40a) adapted to mate frictionally and rotate integrally with the second outer radial surface (32b); said thrust-clutch member (40) moving its radial surface (40a) axially into contact with the second outer radial surface (32b) of said pulley (30), and simultaneously moving the entire pulley (30) to bring the first outer radial surface (31b) of the first half-pulley (31) into contact with the radial surface (10a) of the input member (10), so as to make said radial surfaces frictionally integral with each other, and exerting axial thrust on the two half-pulleys (31, 32) so as to determine the axial distance between them in direct relation to its own axial position; said thrust-clutch member having a position, at a maximum distance from the input member, in which said radial surfaces are detached; and
a control device (50) for varying, on command, the axial position of the thrust-clutch member (40).

2. An assembly as claimed in Claim 1, **characterized in that** said radial surfaces (10a-31b, 40a-32b) are mated in pairs with the aid of respective friction disks (21, 22).

3. An assembly as claimed in Claim 1, **characterized by** comprising a sleeve (15) fitted coaxially to and idle with respect to the drive shaft (11), and connected to each said half-pulley (31, 32) so that the half-pulleys rotate integrally with the sleeve, while at least one half-pulley (32) is movable axially with respect to the sleeve.

4. An assembly as claimed in Claim 3, **characterized by** comprising stop means (16) for limiting the maximum distance between the half-pulleys (31, 32) on the sleeve (15), which distance determines the minimum winding radius of the belt (33); the sleeve (15) being movable axially along the drive shaft (11), so that the first outer radial surface (32b) is normally maintained far from the radial surface (10a) of the input member (10).

5. An assembly as claimed in Claim 4, **characterized by** comprising elastic means (19) for moving the sleeve (15) away from the input member (10); the thrust exerted by said elastic means (19) being overcome by the thrust-clutch member (40) moving towards the input member (10).

6. An assembly as claimed in Claim 1, **characterized in that** said control device comprises a lever (51) acting axially on the thrust-clutch member (40) and activated by a linear actuator (56) via the interposition of an elastic means (57) for easing frictional engagement of the radial surfaces (10a-31b, 32b-40a).
